# EUROPÄISCHE PATENTSCHRIFT

(11) **EP 2 344 554 B1**
(45) Veröffentlichungstag und Bekanntmachung des Hinweises auf die Patenterteilung: **05.12.2012**
(21) Anmeldenummer: 09740297.8
(22) Anmeldetag: 15.10.2009
(51) Int. Cl.: C08F 220/10, C08F 220/18, C08F 220/56

(54) **COPOLYMER ZUR HERSTELLUNG WÄRMEFORMSTABILER FORMKÖRPER AUS FORMMASSEN ODER GUSSGLAS**
COPOLYMER FOR PRODUCING MOLDED BODIES THAT ARE DIMENSIONALLY STABLE UNDER HEAT FROM MOLDING COMPOUNDS OR CAST GLASS
COPOLYMÈRE POUR LA FABRICATION DE CORPS MOULÉS THERMOSTABLES À PARTIR DE MATIÈRES MOULABLES OU DE VERRE COULÉ

(30) Priorität: 14.11.2008 DE 102008057438
(43) Veröffentlichungstag der Anmeldung: 20.07.2011
(73) Patentinhaber: Evonik Röhm GmbH, 64293 Darmstadt (DE)
(72) Erfinder: DIETRICH, Gerald, 64665 Alsbach-Hähnlein (DE); CARLOFF, Rüdiger, 64291 Darmstadt (DE); KARNBROCK, Wilhelm, 64625 Bensheim (DE); KNEBEL, Joachim, 64665 Alsbach-Hähnlein (DE); SHEN, Zhong, Shanghai 201108 (CN); HAW, Chiew-Chiang, Taipei 104 (TW)
(86) Internationale Anmeldenummer: PCT/EP2009/063443
(87) Internationale Veröffentlichungsnummer: WO 2010/054909

(56) Entgegenhaltungen:
- EP-A1- 1 806 614
- EP-A2- 0 431 903
- US-A- 5 824 452

## Beschreibung

Die vorliegende Erfindung betrifft ein Copolymer zur Herstellung wärmeformstabiler Formmassen oder Gussglas.

Für Kunststoff-Formteile oder -platten mit hoher Transparenz, hervorragender optischer Güte und geringer Wasseraufnahme werden häufig Polyalkylmethacrylat Formmassen, insbesondere Polymethylmethacrylat (PMMA) Formmassen eingesetzt. Die Wärmeformbeständigkeit dieser Formmassen ist vergleichsweise niedrig. Für PMMA-Formmassen liegt sie, definiert über die Vicat-Temperatur, je nach Polymerisationstemperatur bei 105-114°C.

Häufig wird die Polymerisation von PMMA-Formmassen in Gegenwart von Acrylaten durchgeführt. Die Acrylate führen zu einer Erhöhung der Thermostabilität des PMMA und zu einer leichteren Verarbeitbarkeit, indem sie die Fliesseigenschaften ändern. Sie haben allerdings den Nachteil, dass sie die Wärmeformbeständigkeit weiter absenken.

Somit ist der mögliche Einsatzbereich von Polyalkylmethacrylat-Formmassen, insbesondere von PMMA-Formmassen beschränkt. Die "Gebrauchstemperatur" liegt dabei deutlich unterhalb der Erweichungstemperatur, so dass z. B. für PMMA schon bei Temperaturen von größer 95°C von einer mangelnden Gebrauchsfähigkeit des Polymers auszugehen ist.

Für den Einsatz bei höheren Temperaturen müssen deshalb andere Kunststoffe verwendet werden. Als transparente Kunststoffe kommen hierfür z. B. Polycarbonate mit einer Vicattemperatur von ca. 150°C in Frage, wobei auch die Gebrauchstemperatur von Polycarbonat ebenfalls nicht an die Vicattemperatur des Materials von 150°C heranreicht, sondern ca. 20°C niedriger, also bei ca. 130°C, liegt. Polycarbonat ist gegenüber PMMA sehr kratzempfindlich und bedeutend weniger witterungsstabil.

Alternativ ist bekannt, durch Copolymerisation von MMA mit sperrigen Comonomeren die Beweglichkeit der Polymerketten zu reduzieren. Durch diesen Effekt erhöht sich die Wärmeformbeständigkeit des PMMA.

Weiterhin ist bekannt, dass Methacrylamide als Comonomer in der Polymerisation mit Methacrylaten zu einer Erhöhung der Wärmeformbeständigkeit führen.

So schlägt z. B. die Druckschrift CN 1314423 A die Copolymerisation von Methylmethacrylat mit N-monosubstituierten Methacrylamiden, wie z. B. N-Isobornylmethacrylamid, vor. Die Glastemperatur des resultierenden Copolymers soll im Bereich von 120°C-123°C liegen.

In ähnlicher Weise beschreibt die Druckschrift EP 1767376 A1 organische Partikel für Tintenstrahlmedien, die ein Copolymer aus einem alicyclischen (Meth)acrylat mit 7 bis 19 Kohlenstoffatomen in der Estergruppe und ein copolymerisierbares Monomer enthalten.

Als alicyclisches (Meth)acrylat mit 7 bis 19 Kohlenstoffatomen in der Estergruppe wird Isobornylmethacrylat bevorzugt genannt.

Als copolymerisierbares Monomer werden u. a. Methylmethacrylat, N-Aminoalkylacrylamide und N-Aminoalkylmethacrylamide angeführt. Weiterhin wird darauf hingewiesen, dass als copolymerisierbares Monomer die genannten Verbindungen alleine oder in Kombination von zwei oder mehreren gewählt werden können.

Im Rahmen einer besonderen Variante werden Blends aus zwei Copolymeren eingesetzt, wobei das erste Copolymer z. B. Einheiten von Methylmethacrylat und von Isobornylmethacrylat und das zweite Copolymer z. B. Einheiten von Methylmethacrylat und von Methacrylamid umfassen kann.

Obwohl diese Lösungsansätze grundsätzlich dazu geeignet sind, die Wärmeformbeständigkeit von PMMA-Formmassen zu erhöhen, so weisen sie doch eine Reihe von Nachteilen auf. Zum einem wird durch die Verwendung von (Meth)acrylamiden die Wasseraufnahme des resultierenden Copolymers deutlich erhöht. Weiterhin zeigen die Copolymere aufgrund der Stickstoffgruppe des Methacrylamids einen deutlich höheren Gelbwert als reine Methyl(meth)acrylatester. Schließlich sind auch die benötigten Comonomere vergleichsweise teuer.

JP2008-024843 A offenbart ein Acrylamid-cyclohexylmethacrylat-2-ethylhexylacrylat-glycidylmethacrylat-methacrylsäure-methylmethacrylat-Copolymer.

EP 716344 A1 beschreibt ein Benzylmethacrylat-N-(p-hydroxyphenyl)methacrylamid-acrylnitril-methylmethacrylat-methacrylsäure-Copolymer.

Aufgabe der vorliegenden Erfindung war es daher, bessere Möglichkeiten zur Erhöhung der Wärmeformbeständigkeit von Polyalkyl(meth)acrylat-Formmassen, insbesondere von PMMA-Formmassen, aufzuzeigen. Es sollte ein polymeres Ausgangsmaterials angegeben werden, das bezüglich den positiven Eigenschaften des Polyalkyl(meth)acrylats (Transparenz, Witterungsbeständigkeit, Verarbeitbarkeit) diesem zumindest ebenbürtig ist, es jedoch hinsichtlich der Wärmeformbeständigkeit überragt. Außerdem sollte das neue Kunststoffmaterial zur Herstellung von Formkörpern im Gießverfahren oder zur Verarbeitung in Kunststoffformmassen geeignet sein, aus denen sich im Spritzguss und/oder im Extrusionsverfahren Formkörper mit erhöhter Wärmeformbeständigkeit fertigen lassen. Weiterhin sollten die Formmassen eine vergleichsweise geringe Wasseraufnahme zeigen und sich weniger leicht verfärben.

Diese und weitere nicht einzeln aufgeführte Aufgaben werden durch ein Copolymer mit allen Merkmalen des Anspruchs 1 gelöst. Besonders zweckmäßige Abwandlungen des Copolymers werden in den rückbezogenen Unteransprüchen beschrieben. Die übrigen Ansprüche schützen einen wärmeformbeständigen Gussglaskörper, die Verwendung des Copolymers in Formmassen, einen wärmeformbeständigen Formkörper, enthaltend ein erfindungsgemäßes Copolymer sowie seine Verwendung.

Überraschend wurde gefunden, dass bei Copolymerisation von kurzkettigen Alkyl(meth)acrylaten, wie z.B. Methylmethacrylat, mit (Meth)acrylamiden und cyclischen (Meth)acrylatestern die Wärmeformbeständigkeit besonders stark zunimmt. Die Erhöhung der Wärmeformbeständigkeit im Terpolymer ist deutlich stärker als aufgrund der Glastemperatur der einzelnen Copolymere zu erwarten ist.

Dadurch, man ein Copolymer bereitstellt, das durch Copolymerisation von
A) einer oder mehreren ethylenisch ungesättigten Esterverbindungen der Formel (I) 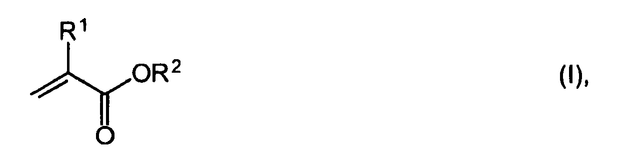 worin R¹ Wasserstoff oder Methyl darstellt und R² einen linearen oder
   verzweigten Alkylrest mit 1 bis 8 Kohlenstoffatomen bedeutet,
B) einer oder mehreren ethylenisch ungesättigten Esterverbindungen der Formel (II) 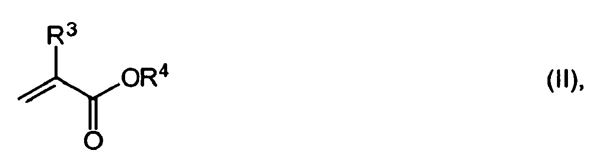 worin R³ Wasserstoff oder Methyl darstellt und R⁴ einen cyclischen Rest mit 8 bis 30 Kohlenstoffatomen bedeutet,
C) einer oder mehreren ethylenisch ungesättigten Amidverbindungen der Formel (III) 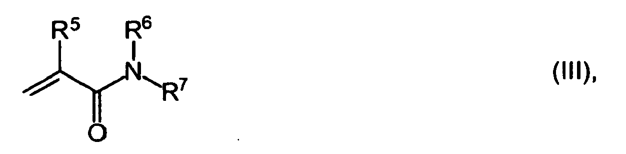 worin R⁵ Wasserstoff oder Methyl darstellt und R⁶ und R⁷, jeweils unabhängig voneinander, Wasserstoff oder einen linearen oder verzweigten Rest mit 1 bis 40 Kohlenstoffatomen bedeuten,
erhältlich ist, gelingt es auf nicht ohne Weiteres vorhersehbare Weise, die Wärmeformbeständigkeit von Polyalkyl(meth)acrylat-Formmassen auf vergleichsweise einfache Art und Weise signifikant zu verbessern.

Dabei weist das so erhältliche Copolymer ein deutlich verbessertes Eigenschaftsprofil auf. Einerseits ist es bezüglich der positiven Eigenschaften des Polyalkyl(meth)acrylats (Transparenz, Witterungsbeständigkeit, Verarbeitbarkeit) diesem zumindest ebenbürtig, andererseits zeigt es eine deutlich höhere Wärmeformbeständigkeit. Es ist zur Herstellung von Formkörpern im Gießverfahren oder zur Verarbeitung in Kunststoffformmassen besonders geeignet, aus denen sich im Spritzguss und/oder im Extrusionsverfahren Formkörper mit erhöhter Wärmeformbeständigkeit fertigen lassen. Da, im Gegensatz zu Blends, bei der Kombination der Komponenten B) und C) in einem Copolymer weniger (Meth)acrylamide benötigt werden, um eine gewünschte Wärmeformbeständigkeit zu erzielen, zeigen die Formmassen eine vergleichsweise geringe Wasseraufnahme und sind deutlich farbstabiler.

Für die Zwecke der vorliegenden Erfindung hat es sich besonders bewährt, die Reste R¹, R³ und R⁵ gleich zu wählen. Daher sind im Rahmen einer ersten besonders bevorzugten Ausführungsform R¹, R³ und R⁵ Methyl. Im Rahmen einer zweiten besonders bevorzugten Ausführungsform sind R¹, R³ und R⁵ Wasserstoff.

R² der Esterverbindungen der Formel (I) ist ein linearer oder verzweigter Alkylrest mit 1 bis 8 Kohlenstoffatomen, besonders bevorzugt mit 1 bis 4 Kohlenstoffatomen, insbesondere Methyl.

Beispiele für Esterverbindungen der Formel (I) sind unter anderem (Meth)acrylate, die sich von gesättigten Alkoholen ableiten, wie Methyl(meth)acrylat, Ethyl(meth)acrylat, n-Propyl(meth)acrylat, isoPropyl(meth)acrylat, n-Butyl(meth)acrylat, tert.-Butyl(meth)acrylat, Pentyl(meth)acrylat, Hexyl(meth)acrylat, Heptyl(meth)acrylat und Octyl(meth)acrylat.

R⁴ der Esterverbindungen der Formel (11) ist ein cyclischer Rest mit 8 bis 30 Kohlenstoffatomen, bevorzugt ein alicyclischer Kohlenwasserstoffrest, der vorzugsweise zumindest bicyclisch ist.

Beispiele für Esterverbindungen der Formel (II) sind unter anderem 1-Naphthyl(meth)acrylat, 2-Naphthyl(meth)acrylat, 1-Decalin(meth)acrylat, 2-Decalin(meth)acrylat, 3-Decalin(meth)acrylat, 2,4,5-Tri-t-butyl-3-vinylcyclohexyl(meth)acrylat, 2,3,4,5-Tetra-t-butylcyclohexyl(meth)acrylat, Bornyl(meth)acrylat, Isobomyl(meth)acrylat und Adamantyl(meth)acrylat.

Isobornyl(meth)acrylat wird im Rahmen der vorliegenden Erfindung besonders bevorzugt eingesetzt.

R⁶ und R⁷ der Amidverbindungen der Formel (III) sind, jeweils unabhängig voneinander, Wasserstoff oder ein linearer oder verzweigter Rest, bevorzugt ein aliphatischer Rest, mit 1 bis 40 Kohlenstoffatomen, besonders bevorzugt mit 1 bis 20 Kohlenstoffatomen, insbesondere mit 1 bis 8 Kohlenstoffatomen.

Im Rahmen einer ersten bevorzugten Ausführungsform der vorliegenden Erfindung sind R⁶ und R⁷ gleich, besonders bevorzugt Wasserstoff.

Im Rahmen einer zweiten bevorzugten Ausführungsform der vorliegenden Erfindung ist R⁶ Wasserstoff und R⁷ ist ein Kohlenwasserstoffrest mit 1 bis 20 Kohlenstoffatomen, besonders bevorzugt mit 1 bis 8 Kohlenstoffatomen, insbesondere mit 1 bis 4 Kohlenstoffatomen.

Beispiele für Amidverbindungen der Formel (III) sind unter anderem (Meth)acrylamid, Methyl(meth)acrylamid, Dimethyl(meth)acrylamid, Ethyl(meth)acrylamid, Diethyl(meth)acrylamid, n-Propyl(meth)acrylamid, Di-n-propyl(meth)acrylamid, iso-Propyl(meth)acrylamid, Di-isopropyl(meth)acrylamid, n-Butyl(meth)acrylamid, Di-n-butyl(meth)acrylamid, sec-Butyl(meth)acrylamid, Di-sec-butyl(meth)acrylamid, t-Butyl(meth)acrylamid, Di-t-butyl(meth)acrylamid, Benzyl(meth)acrylamid, N-(3-Dimethylaminopropyl)(meth)acrylamid, Hexyl(meth)acrylamid und Di-Hexyl(meth)acrylamid.

Iso-Propyl(meth)acrylamid wird im Rahmen der vorliegenden Erfindung besonders bevorzugt eingesetzt.

Die relativen Anteile der Comonomerbausteine im erfindungsgemäßen Copolymer sind von untergeordneter Bedeutung. Sie können jedoch dazu genutzt werden, das Eigenschaftsprofil des Copolymers gezielt zu beeinflussen. Besonders bewährt haben sich in diesem Zusammenhang Copolymere, die durch Copolymerisation von
A) 40,0 Gew.-% bis 92,0 Gew.-% von einer oder mehreren ethylenisch ungesättigten Esterverbindungen der Formel (I),
B) 4,0 Gew.-% bis 30,0 Gew.-% von einer oder mehreren ethylenisch ungesättigten Esterverbindungen der Formel (II) und
C) 4,0 Gew.-% bis 30,0 Gew.-% von einer oder mehreren ethylenisch ungesättigten Amidverbindungen der Formel (III)
erhältlich sind, wobei sich die Anteile der Komponenten A), B) und C) auf das Gewicht der Monomerzusammensetzung beziehen und vorzugsweise zu 100,0 Gew.-% addieren.

Das Copolymer der vorliegenden Erfindung kann ggf. weitere Wiederholungseinheiten aufweisen, die sich von anderen ethylenisch ungesättigten Monomeren ableiten, die sich mit den Verbindungen der Formeln (I) und/oder (II) und/oder (III) copolymerisieren lassen. Der Anteil der Comonomere liegt bevorzugt im Bereich von 0 bis 40 Gew.-%, insbesondere 1 bis 35 Gew.-% und besonders bevorzugt 5 bis 30 Gew.-%, bezogen auf das Gewicht der Monomerzusammensetzungen zur Herstellung des erfindungsgemäßen Copolymers.

Hierbei sind Comonomere zur Polymerisation gemäß der vorliegenden Erfindung besonders geeignet, die der Formel (IV) entsprechen: 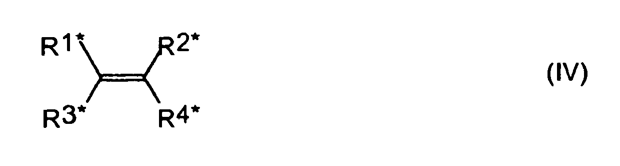 worin R^{1*} und R^{2*} unabhängig ausgewählt sind aus der Gruppe bestehend aus Wasserstoff, Halogene, CN, lineare oder verzweigte Alkylgruppen mit 1 bis 20, vorzugsweise 1 bis 6 und besonders bevorzugt 1 bis 4 Kohlenstoffatomen, welche mit 1 bis (2n+1) Halogenatomen substituiert sein können, wobei n die Zahl der Kohlenstoffatome der Alkylgruppe ist (beispielsweise CF₃), α, β-ungesättigte lineare oder verzweigte Alkenyl- oder Alkynylgruppen mit 2 bis 10, vorzugsweise von 2 bis 6 und besonders bevorzugt von 2 bis 4 Kohlenstoffatomen, welche mit 1 bis (2n-1) Halogenatomen, vorzugsweise Chlor, substituiert sein können, wobei n die Zahl der Kohlenstoffatome der Alkylgruppe, beispielsweise CH₂=CCl-, ist, Cycloalkylgruppen mit 3 bis 8 Kohlenstoffatomen, welche mit 1 bis (2n-1) Halogenatomen, vorzugsweise Chlor, substituiert sein können, wobei n die Zahl der Kohlenstoffatome der Cycloalkylgruppe ist; Arylgruppen mit 6 bis 24 Kohlenstoffatomen, welche mit 1 bis (2n-1) Halogenatomen, vorzugsweise Chlor, und/oder Alkylgruppen mit 1 bis 6 Kohlenstoffatomen substituiert sein können, wobei n die Zahl der Kohlenstoffatome der Arylgruppe ist; C(=Y*)R^{5*}, C(=Y*)NR^{6*}R^{7*}, Y*C(=Y*)R^{5*}, SOR^{5*}, SO₂R^{5*}, OSO₂R^{5*}, NR^{8*}SO₂R^{5*}, PR^{5*}₂, P(=Y*)R^{5*}₂, Y*PR^{5*}₂, Y*P(=Y*)R^{5*}₂, NR^{8*}₂ welche mit einer zusätzlichen R^{8*}-, Aryl- oder Heterocyclyl-Gruppe quaternärisiert sein kann, wobei Y* NR^{8*}, S oder O, vorzugsweise O sein kann; R^{5*} eine Alkylgruppe mit 1 bis 20 Kohlenstoffatomen, eine Alkylthio mit 1 bis 20 Kohlenstoffatomen, OR¹⁵ (R¹⁵ ist Wasserstoff oder ein Alkalimetall), Alkoxy von 1 bis 20 Kohlenstoffatomen, Aryloxy oder Heterocyklyloxy ist; R^{6*} und R^{7*} unabhängig Wasserstoff oder eine Alkylgruppe mit 1 bis 20 Kohlenstoffatomen sind, oder R^{6*} und R^{7*} können zusammen eine Alkylengruppe mit 2 bis 7 vorzugsweise 2 bis 5 Kohlenstoffatomen bilden, wobei sie einen 3 bis 8-gliedrigen, vorzugsweise 3 bis 6-gliedrigen Ring bilden, und R^{8*} Wasserstoff, lineare oder verzweigte Alkyl- oder Arylgruppen mit 1 bis 20 Kohlenstoffatomen sind;
R^{3*} und R^{4*} unabhängig ausgewählt aus der Gruppe bestehend aus Wasserstoff, Halogen (vorzugsweise Fluor oder Chlor), Alkylgruppen mit 1 bis 6 Kohlenstoffatomen und COOR^{9*}, worin R^{9*} Wasserstoff, ein Alkalimetall oder eine Alkylgruppe mit 1 bis 40 Kohlenstoffatomen ist, sind, oder R^{3*} und R^{4*} können zusammen eine Gruppe der Formel (CH₂)ₙ bilden, welche mit 1 bis 2n' Halogenatomen oder C₁ bis C₄ Alkylgruppen substituiert sein kann, oder der Formel C(=O)-Y*-C(=O) bilden, wobei n' von 2 bis 6, vorzugsweise 3 oder 4 ist und Y* wie zuvor definiert ist; und wobei zumindest 2 der Reste R^{1*}, R^{2*}, R^{3*} und R^{4*} Wasserstoff oder Halogen sind.

Zu den bevorzugten Comonomeren gehören unter anderem Vinylhalogenide, wie beispielsweise
Vinylchlorid, Vinylfluorid, Vinylidenchlorid und Vinylidenfluorid;
Vinylester, wie Vinylacetat;
Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltuluol und p-Methylstyrol, halogenierte Styrole, wie beispielsweise Monochlorstyrole, Dichlorstyrole, Tribromstyrole und Tetrabromstyrole;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1 -vinylimidazol, N-Vinylpyrrolidon, 2-Vnylpyrrolidon, N-Vinylpyrrolidin, 3-Vinylpyrrolidin, N-Vinylcaprolactam, N-Vinylbutyrolactam, Vinyloxolan, Vinylfuran, Vinyloxazole und hydrierte Vinyloxazole;
Vinyl- und Isoprenylether;
Maleinsäure und Maleinsäurederivate, wie beispielsweise Maleinsäureanhydrid, Methylmaleinsäureanhydrid, Maleinimid, Methylmaleinimid;
Fumarsäure und Fumarsäurederivate;
Acrylsäure und Methacrylsäure;
Diene, wie beispielsweise Divinylbenzol;
Aryl(meth)acrylate, wie Benzylmethacrylat oder Phenylmethacrylat, wobei die Arylreste jeweils unsubstituiert oder bis zu vierfach substituiert sein können;
Methacrylate von halogenierten Alkoholen, wie 2,3-Dibromopropylmethacrylat, 4-Bromophenylmethacrylat, 1,3-Dichloro-2-propylmethacrylat, 2-Bromoethylmethacrylat, 2-lodoethylmethacrylat, Chloromethylmethacrylat;
Hydroxyalkyl(meth)acrylate, wie 3-Hydroxypropylmethacrylat, 3,4-Dihydroxybutylmethacrylat, 2-Hydroxyethylmethacrylat, 2-Hydroxypropylmethacrylat, 2,5-Dimethyl-1,6-hexandiol(meth)acrylat, 1,10-Decandiol(meth)acrylat;
carbonylhaltige Methacrylate, wie 2-Carboxyethylmethacrylat, Carboxymethylmethacrylat, Oxazolidinylethylmethacrylat, N-(Methacryloyloxy)formamid, Acetonylmethacrylat, N-Methacryloylmorpholin, N-Methacryloyl-2-pyrrolidinon, N-(2-Methacryloyloxyethyl)-2-pyrrolidinon, N-(3-Methacryloyloxypropyl)-2-pyrrolidinon, N-(2-Methacryloyloxypentadecyl)-2-pyrrolidinon, N-(3-Methacryloyloxyheptadecyl)-2-pyrrolidinon;
Glycoldimethacrylate, wie 1,4-Butandiolmethacrylat, 2-Butoxyethylmethacrylat, 2-Ethoxyethoxymethylmethacrylat, 2-Ethoxyethylmethacrylat;
Methacrylate von Etheralkoholen, wie Tetrahydrofurfurylmethacrylat, Vinyloxyethoxyethylmethacrylat, Methoxyethoxyethylmethacrylat, 1-Butoxypropylmethacrylat, 1-Methyl-(2-vinyloxy)ethylmethacrylat, Cyclohexyloxymethylmethacrylat, Methoxymethoxyethylmethacrylat, Benzyloxymethylmethacrylat, Furfurylmethacrylat, 2-Butoxyethylmethacrylat, 2-Ethoxyethoxymethylmethacrylat, 2-Ethoxyethylmethacrylat, Allyloxymethylmethacrylat, 1-Ethoxybutylmethacrylat, Methoxymethylmethacrylat, 1-Ethoxyethylmethacrylat, Ethoxymethylmethacrylat und ethoxylierte (Meth)acrylate, die bevorzugt 1 bis 20, insbesondere 2 bis 8 Ethoxygruppen aufweisen;
Aminoalkyl(meth)acrylate, wie Dimethylaminopropylmethacrylat, 3-Diethylaminopentylmethacrylat, 3-Dibutylaminohexadecyl(meth)acrylat;
Nitrile der (Meth)acrylsäure und andere stickstoffhaltige Methacrylate, wie N-(Methacryloyloxyethyl)diisobutylketimin, N-(Methacryloyloxyethyl)dihexadecylketimin, Methacryloylamidoacetonitril, 2-Methacryloyloxyethylmethylcyanamid, Cyanomethylmethacrylat; heterocyclische (Meth)acrylate, wie 2-(1-Imidazolyl)ethyl(meth)acrylat, 2-(4-Morpholinyl)ethyl(meth)acrylat und 1-(2-Methacryloyloxyethyl)-2-pyrrolidon;
Oxiranylmethacrylate, wie 2,3-Epoxybutylmethacrylat, 3,4-Epoxybutylmethacrylat, 10,11-Epoxyundecylmethacrylat, 2,3-Epoxycyclohexylmethacrylat, 10,11-Epoxyhexadecylmethacrylat; Glycidylmethacrylat.

Diese Monomere können einzeln oder als Mischung eingesetzt werden.

Die Polymerisation zum Erhalt der Copolymerisate kann auf an sich bekannte Weise erfolgen. Besonders bewährt haben sich Verfahren der radikalischen Polymerisation, insbesondere die Substanzpolymerisation, die Polymerisation in einem Lösungsmittel, die Suspensionspolymerisation und die Emulsionspolymerisation. Im Allgemeinen werden hierzu ein Polymerisationsinitiator sowie ein Kettenüberträger eingesetzt.

Zu den verwendbaren Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilauroylperoxid, tert.-Butylper-2-ethylhexanoat, Ketonperoxid, tert-Butylperoctoat, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Als Kettenüberträger eignen sich schwefelfreie und schwefelhaltige Verbindungen, die an sich bekannt sind. Zu den schwefelfreien Verbindungen gehören beispielsweise, ohne dass hierdurch eine Einschränkung erfolgen soll, dimeres α-Methylstyrol (2,4 Diphenyl-4-methyl-1-penten), Enolether aliphatischer und/oder cycloaliphatischer Aldehyde, Terpene, α-Terpinen, Terpinolen, 1,4-Cyclohexadien, 1,4-Dihydronaphthalin, 1,4,5,8-Tetrahydronaphthalin, 2,5-Dihydrofuran, 2,5-Dimethylfuran und/oder 3,6-Dihydro-2H-pyran, bevorzugt ist dimeres α-Methylstyrol.

Zu den schwefelhaltigen Verbindungen gehören beispielsweise, ohne dass hierdurch eine Einschränkung erfolgen soll, Thioglycolsäure, 2-Mercaptoethanol, 2-Ethylhexylthioglycolat, n-Butylmercaptan, Octylmercaptan, n-Dodecylmercaptan, tert-Dodecylmercaptan, Methy-3-mercaptopropionat.

Diese Kettenüberträger sind handelsüblich. Sie lassen sich aber auch auf dem Fachmann bekannte Weise herstellen. So wird die Herstellung von dimerem α-Methylstyrol in der Patentschrift DE 966 375 beschrieben. Enolether aliphatischer und/oder cycloaliphatischer Aldehyde sind in der Patentschrift DE 3 030 373 offenbart. Die Darstellung von Terpenen wird in der EP 80 405 erläutert. Die Offenlegungsschriften JP 78/121 891 und JP 78/121 890 erläutern die Darstellung von α-Terpinen, Terpinolen, 1,4-Cyclohexadien, 1,4-Dihydronaphthalin, 1,4,5,8-Tetrahydronaphthalin. Die Herstellung von 2,5-Dihydrofuran, 2,5-Dimethylfuran und 3,6-Dihydro-2H-pyran wird in der Offenlegungsschrift DE 2 502 283 dargestellt.

Die Polymerisation der Monomere kann bei Normaldruck, Unter- oder Überdruck durchgeführt werden. Auch die Polymerisationstemperatur ist unkritisch. Im Allgemeinen liegt sie jedoch im Bereich von -20° - 200°C, vorzugsweise 0° - 160°C und besonders bevorzugt 70° - 130°C.

Die Polymerisation kann auch in einem Lösungsmittel oder ohne Lösungsmittel durchgeführt werden. Der Begriff des Lösungsmittels ist hierbei weit zu verstehen.

Weitere Informationen zur radikalischen Polymerisation können der Fachliteratur, wie z. B. Ullmanns's Encyclopedia of Industrial Chemistry, Sixth Edition, entnommen werden. Wertvolle Hinweise zur Substanzpolymerisation finden sich z. B. in Houben-Weyl Bd. E20, Teil 2 (1987), Seite 1145ff. Nützliche Informationen zur Suspensionspolymerisation werden auch in der Druckschrift Houben-Weyl, Bd. E20, Teil 2 (1987), Seite 1149f, beschrieben.

Neben der Zusammensetzung des Copolymers kann auch sein Molekulargewicht eine gewisse Rolle für die spätere Verarbeitung der Copolymeren zur Herstellung wärmeformbeständiger Formkörper spielen. So lassen sich mögliche spätere Verarbeitungsvarianten durch gezielte Einstellung des Molekulargewichts unterstützen.

Einerseits ist es dabei im Rahmen der Erfindung möglich, beim eigentlichen Copolymerisationsprozess solch hohe Molekulargewichte einzustellen, dass eine anschließende thermische Formung unmöglich wird. Andererseits ist durch Wahl eines niedrigeren Molekulargewichtes der Erhalt eines Copolymerisats möglich, welches in weiteren thermischen Verfahren anschließend geformt werden kann.

Wird nämlich eine Verarbeitung der erfindungsgemäßen Comonomere im Extrusions- oder Spritzgießverfahren gewünscht, dann wird für die erfindungsgemäßen Copolymeren ein niedrigeres Molekulargewicht M_{W} zwischen 30.000 g/mol und 250.000 g/mol, vorteilhaft zwischen 60.000 g/mol und 200.000 g/mol, bevorzugt. Prinzipiell sind derlei Copolymerisate durch Erhitzen in eine thermoplastisch verarbeitbare Schmelze überführbar.

Das Molekulargewicht kann nach bekannten Methoden bestimmt werden. Beispielsweise kann die Gelpermeationschromatographie (GPC) eingesetzt werden. Ebenso ist ein osmometrisches Verfahren, wie beispielsweise die "Vapour Phase Osmometry" zur Bestimmung der Molekulargewichte einsetzbar. Die genannten Verfahren sind beispielsweise beschrieben in: P.J. Flory, "Principles of Polymer Chemistry" Comell University Press (1953), Chapter VII, 266-316 sowie "Macromolecules, an Introduction to Polymer Science°, F.A. Bovey and F.H. Winslow, Editors, Academic Press (1979), 296-312 sowie W.W. Yau, J.J. Kirkland and D.D. Bly, "Modem Size Exclusion Liquid Chromatography, John Wiley and Sons, New York, 1979. Bevorzugt zur Bestimmung der Molekulargewichte der hierin vorgestellten Polymere wird die Gelpermeationschromatographie eingesetzt. Es sollte bevorzugt gegen Polymethylacrylat- oder Polyacrylat-Standards gemessen werden.

Grundsätzlich können die Copolymere der vorliegenden Erfindung an alle dem Fachmann geläufige Formgebungsprozesse für die Herstellung von Formkörpern mit verbesserter Wärmeformbeständigkeit angepasst werden.

Copolymere gemäß der Erfindung lassen sich günstigerweise zu Kunststoffformmassen in Granulatform verarbeiten. Diese Formmassegranulate sind dann für die weitere Verarbeitung durch Extrusion oder Spritzgießen besonders geeignet. Die Herstellung der Formmassegranulate erfolgt z.B. durch Extrusion und Granulation der als Polymersirup oder Perlform angefallenen Kunststoffe, wobei niedermolekulare Begleitstoffe von den Polymeren durch Entgasung im Extruder abgetrennt werden. Ein derartiges Verfahren wird z. B. im Handbuch der Kunststoff-Extrusionstechnik, Bd. I und II (Hrsg.: F. Heusen, W. Kappe, H. Potente; Hauser Verlag 1986 u. 1989), beschrieben.

Hat man beim eigentlichen Polymerisationsvorgang ein solches hohes Molekulargewicht eingestellt, dass eine anschließende thermische Weiterverarbeitung nur schwer möglich ist, so ist erfindungsgemäß dafür Sorge zu tragen, dass die Formung bereits während des Polymerisationsvorgangs, bevorzugt in geeigneter Form, vonstatten geht.

In einer bevorzugten erfindungsgemäßen Ausführungsform wird das Copolymer der Erfindung durch Polymerisation in Lösung, z.B. in einem Lösungsmittel oder den Monomeren selbst hergestellt und je nach Verwendungszweck des Polymersirups, entgast. Auch die Suspensionspolymerisation ist ein durchaus gangbarer Weg zur Herstellung des Copolymeren. Eine Herstellung des Polymeren als Gussglas ist ebenso möglich. Bei der Gussglasproduktion wird ein Polymersirup zwischen ein oder zwei Metall bzw. Glasplatten polymerisiert.

Gegenstand der Erfindung sind demnach auch besonders wärmeformbeständige Formmassen, aufweisend
A) eine oder mehrere ethylenisch ungesättigte Esterverbindungen der Formel (I) 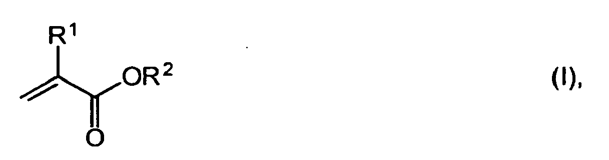 worin R¹ Wasserstoff oder Methyl darstellt und R² einen linearen oder verzweigten Alkylrest mit 1 bis 8 Kohlenstoffatomen bedeutet,
B) eine oder mehrere ethylenisch ungesättigte Esterverbindungen der Formel (II) 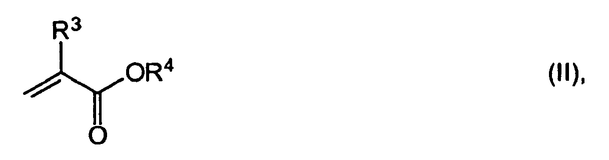 worin R³ Wasserstoff oder Methyl darstellt und R⁴ einen cyclischen Rest mit 8 bis 30 Kohlenstoffatomen bedeutet,
C) eine oder mehrere ethylenisch ungesättigte Amidverbindungen der Formel (III) 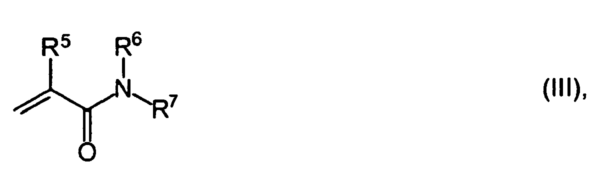 worin R⁵ Wasserstoff oder Methyl darstellt und R⁶ und R⁷, jeweils unabhängig voneinander, Wasserstoff oder einen linearen oder verzweigten Rest mit 1 bis 40 Kohlenstoffatomen bedeuten.

In einer bevorzugten Ausführungsform liegt die Formmasse als Gussglaskörper vor, der vorzugsweise ein mittleres Molekulargewicht M_{W} im Bereich von 500.000 g/mol bis 5.000.000 g/mol aufweist.

Die auf diese Weise erhältlichen Formkörper zeichnen sich vorzugsweise durch die folgenden Eigenschaften aus:

Er weist vorzugsweise eine Viskositätszahl, gemessen gemäß ISO 1628-6, im Bereich von 30 ml/g bis 90 ml/g auf.

Er weist vorzugsweise eine Vicattemperatur, gemessen gemäß ISO 306, von größer 112°C, insbesondere von größer 115°C, auf.

Die erfindungsgemäßen Formkörper können insbesondere als Teile von Haushaltsgeräten, Kommunikationsgeräten, Hobby- oder Sportgeräten, Karosserieteile oder Teile von Karosserieteilen im Automobil-, Schiffs- oder Flugzeugbau, als Teile für Beleuchtungen, Zeichen oder Symbole, Verkaufsstellen oder Kosmetikverkaufsständer, Behältnisse, Heim- oder Bürodekorationen, Möbelanwendungen, Duschtüren und Bürotüren, sowie als Teile, insbesondere Platten, in der Bauindustrie, als Wände, insbesondere als Lärmschutzwände, als Fensterrahmen, Sitzbänke, Leuchtenabdeckungen, Streuscheiben, LED Linsen, LED Körper, LED Halbleiterabdeckung, in Solarmodulen, im Automobilscheinwerfer als Linse, Spiegel, Halterung und Abdeckung, Sensorabdeckungen und zur Automobilverglasung verwendet werden. Typische Automobilaußenteile sind z. B. Spoiler, Blenden, Dachmodule oder Außenspiegelgehäuse.

Im Folgenden wird die Erfindung anhand von Beispielen eingehender erläutert, ohne dass hierdurch eine Einschränkung des Erfindungsgedanken erfolgen soll.

Liste der in den Beispielen und Vergleichsbeispielen verwendeten Abkürzungen für Substanzen:
- MMA:: Methylmethacrylat
- MAA:: Methacrylamid
- IBOMA: Isobornylmethacrylat
- NIPMA: N-Isopropylmethacrylamid;
- TBPND:: tert.-Butylperoxyneodecanoat
- TBPEH:: tert.-Butylperoxy-2-ethylhexanoat
- DDM:: n-Dodecylmercaptan
- MMP:: Methyl-3-mercaptopropionat

Soweit nicht näher angegeben, beziehen sich Prozente und Teile immer auf Gewichtsprozente und Gewichtsteile.

Die in den nachfolgenden Textbeispielen und Tabellen, welche die Bedingungen für die Copolymerisation zusammenfassend darstellen, zur Charakterisierung der Polymeren verwendeten Eigenschaften wurden mittels folgender analytischer Methoden ermittelt:
- Minivicat gemäß ISO 306
- Viscositätszahl gemäß ISO 1628-6
- Thermostabilität mittels Thermogravimetrie (2% Masseverlust, Heizrate 5K/min;Stickstoffatmosphäre)

### 1) Herstellung eines MMA/IBOMA-Copolymers

In einem Rührreaktor wurden 80 % der Monomere und n-Dodecylmercaptan vorgelegt. In Gegenwart von Lösungsmittel wurde bei 80 °C 300 min polymerisiert, wobei über diese Zeit der restliche Monomeranteil, tert.-Butylperoxyneodecanoat und weiteres Lösungsmittel, wie in den Tabellen 1 und 2 angegeben, zudosiert wurde. Im Anschluss an die Dosierung ließ man noch 120 min bei 95°C nach Zugabe von tert.-Butylperoxy-2-ethylhexanoat nachreagieren. Der Endumsatz war 93 %. Anschließend wurde das Polymer durch Abziehen des Lösungsmittels bei 250°C und 20 mbar in einem Entgasungsextruder isoliert. Am erhaltenen Polymer wurden die Viskositätszahl, die Thermostabilität und der Minivicat bestimmt. Die Eigenschaften des Produktes sind in Tabelle 3 aufgeführt.

### 2) Herstellung eines MMA/MAA-Copolymers

In einem Rührreaktor wurden alle Monomere und n-Dodecylmercaptan vorgelegt. In Gegenwart von Lösungsmittel wurde bei 80°C 360 min polymerisiert, wobei über diese Zeit tert.-Butylperoxyneodecanoat und weiteres Lösungsmittel, wie in den Tabellen 1 und 2 angegeben, zudosiert wurde. Im Anschluss an die Dosierung ließ man noch 120 min bei 87°C nach Zugabe von tert.-Butylperoxy-2-ethylhexanoat nachreagieren. Der Endumsatz war 99 %. Anschließend wurde das Polymer durch Abziehen des Lösungsmittels bei 270°C und 20 mbar in einem Entgasungsextruder isoliert. Am erhaltenen Polymer wurden die Viskositätszahl, die Thermostabilität und der Minivicat bestimmt. Die Eigenschaften des Produktes sind in Tabelle 3 aufgeführt.

### 3) Herstellung eines MMA/MAA/IBOMA-Copolymers

In einem Rührreaktor wurden 70 % der Monomeren und Methyl-3-mercaptopropionat vorgelegt. In Gegenwart von Lösungsmittel wurde bei 80°C 360 min polymerisiert, wobei über diese Zeit der restliche Monomeranteil, tert.-Butylperoxyneodecanoat und weiteres Lösungsmittel, wie in den Tabellen 1 und 2 angegeben, zudosiert wurde. Im Anschluss an die Dosierung ließ man noch 120 min bei 85°C nach Zugabe von tert.-Butylperoxy-2-ethylhexanoat nachreagieren. Der Endumsatz war 95 %. Anschließend wurde das Polymer durch Abziehen des Lösungsmittels bei 260°C und 20 mbar in einem Entgasungsextruder isoliert. Am erhaltenen Polymer wurden die Viskositätszahl, die Thermostabilität und der Minivicat bestimmt. Die Eigenschaften des Produktes sind in Tabelle 3 aufgeführt.

### 4) Herstellung eines MMA/NIPMA-Copolymers

In einem Rührreaktor wurden 60 % der Monomeren und Methyl-3-mercaptopropionat vorgelegt. In Gegenwart von Lösungsmittel wurde bei 80°C 360 min polymerisiert, wobei über diese Zeit der restliche Monomeranteil, tert.-Butylperoxyneodecanoat und weiteres Lösungsmittel, wie in den Tabelle 1 und 2 angegeben, zudosiert wurde. Im Anschluss an die Dosierung ließ man noch 120 min bei 95°C nach Zugabe von tert.-Butylperoxy-2-ethylhexanoat nachreagieren. Der Endumsatz war 89 %. Anschließend wurde das Polymer durch Abziehen des Lösungsmittels bei 270°C und 20 mbar in einem Entgasungsextruder isoliert. Am erhaltenen Polymer wurden die Viskositätszahl, die Thermostabilität und der Minivicat bestimmt. Die Eigenschaften des Produktes sind in Tabelle 3 aufgeführt.

### 5) Herstellung eines MMA/NIPMA/IBOMA-Copolymers

In einem Rührreaktor wurden 60 % der Monomeren und Methyl-3-mercaptopropionat vorgelegt. In Gegenwart von Lösungsmittel wurde bei 80°C 360 min polymerisiert, wobei über diese Zeit der restliche Monomeranteil, tert.-Butylperoxyneodecanoat und weiteres Lösungsmittel, wie in den Tabellen 1 und 2 angegeben, zudosiert wurde. Im Anschluss an die Dosierung ließ man noch 120 min bei 95 °C nach Zugabe von tert.-Butylperoxy-2-ethylhexanoat nachreagieren. Der Endumsatz war 98 %. Anschließend wurde das Polymer durch Abziehen des Lösungsmittels bei 250°C und 20 mbar in einem Entgasungsextruder isoliert. Am erhaltenen Polymer wurden die Viskositätszahl, die Thermostabilität und der Minivicat bestimmt. Die Eigenschaften des Produktes sind in Tabelle 3 aufgeführt.

**Tabelle 1: Übersicht über die Monomerzusammensetzungen**

| Exp.# | 1 | 2 | 3 | 4 | 5 |
|---|---|---|---|---|---|
| MMA | 85 | 90 | 80 | 85 | 76 |
| MAA | --- | 10 | 10 | --- | --- |
| IBOMA | 15 | --- | 10 | --- | 12 |
| NIPMA | --- | --- | --- | 15 | 12 |

**Tabelle 2: Konzentrationen und Hilfsstoffe**

| Exp.# | 1 | 2 | 3 | 4 | 5 |
|---|---|---|---|---|---|
| TBPND | 0,38 | 0,30 | 0,30 | 0,30 | 0,30 |
| TBPEH | 0,05 | 0,10 | 0,10 | 0,10 | 0,10 |
| DDM | 0,40 | 0,30 | --- | --- | --- |
| MMP | --- | --- | 0,22 | 0,16 | 0,16 |
| n-Butylacetat [%] | 50 | --- | --- | 30 | 30 |
| 1-Propanol/Wasser 4:1 [%] | --- | 20 | 20 | --- | --- |

**Tabelle 3: Übersicht über die Polymereigenschaften**

| Exp.# | 1 | 2 | 3 | 4 | 5 | PMMA |
|---|---|---|---|---|---|---|
| VST [°C] | 116 | 132 | 139 | 121 | 129 | 115 |
| V.N. [ml/g] | 53 | 55 | 53 | 63 | 45 | 52 |
| T_{d}[°C] | 286 | 287 | 286 | 276 | n.b. | n.b. |

### 6) Herstellung eines MMA/NIPMA/IBOMA-Blends

Im Vergleich zum über Copolymerisation hergestellten Polymer 5) wurde ein Blend mit gleicher Zusammensetzung untersucht. Dieses wurde erhalten, indem ein Copolymerisat aus MMA und IBOMA mit der Zusammensetzung 75-25 und ein eines aus MMA und NIPMA mit der Zusammensetzung 75-25 zu gleiche Anteilen in einem Kneter zu einem Blend abgemischt wurden.

Das erhaltene Polymerisat wies im Gegensatz zu dem Terpolymerisat 5) nur eine VST von 123 °C auf.

## Patentansprüche

1. Copolymer zur Herstellung von Formmassen oder Gussglas mit erhöhter Wärmeformbeständigkeit, erhältlich durch Copolymerisation von
A) einer oder mehreren ethylenisch ungesättigten Esterverbindungen der Formel (I) 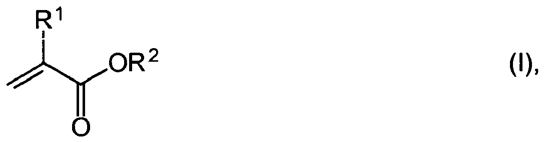 worin R¹ Wasserstoff oder Methyl darstellt und R² einen linearen oder verzweigten Alkylrest mit 1 bis 8 Kohlenstoffatomen bedeutet,
B) einer oder mehreren ethylenisch ungesättigten Esterverbindungen der Formel (II) 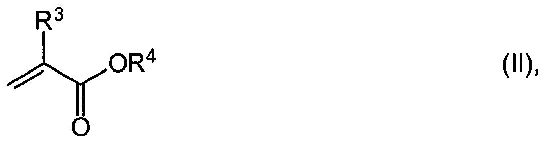 worin R³ Wasserstoff oder Methyl darstellt und R⁴ einen cyclischen Rest mit 8 bis 30 Kohlenstoffatomen bedeutet,
C) einer oder mehreren ethylenisch ungesättigten Amidverbindungen der Formel (III) 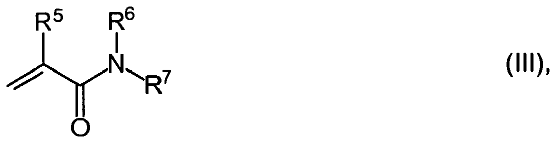
worin R⁵ Wasserstoff oder Methyl darstellt und R⁶ und R⁷, jeweils unabhängig voneinander, Wasserstoff oder einen linearen oder verzweigten Rest mit 1 bis 40 Kohlenstoffatomen bedeuten.

2. Copolymer nach Anspruch 1, **dadurch gekennzeichnet, dass** R¹, R³ und R⁵ Methyl sind oder dass R¹, R³ und R⁵ Wasserstoff sind.

3. Copolymer nach Anspruch 1 oder 2, **dadurch gekennzeichnet, dass** R² ein linearer oder verzweigter Alkylrest mit 1 bis 4 Kohlenstoffatomen, bevorzugt Methyl ist.

4. Copolymer nach mindestens einem der vorangehenden Ansprüche, **dadurch gekennzeichnet, dass** R⁴ ein alicyclischer Kohlenwasserstoffrest, bevorzugt ein bicyclischer Rest, besonders bevorzugt ein Isobornyl Rest ist.

5. Copolymer nach mindestens einem der vorangehenden Ansprüche, **dadurch gekennzeichnet, dass** R⁶ und R⁷ Wasserstoff sind oder dass R⁶ Wasserstoff ist und R⁷ für einen Kohlenwasserstoffrest mit 1 bis 20 Kohlenstoffatomen, bevorzugt mit 1 bis 4 Kohlenstoffatomen, besonders bevorzugt für Isopropyl steht.

6. Copolymer nach mindestens einem der vorangehenden Ansprüche, **dadurch gekennzeichnet, dass** es durch Copolymerisation von
A) 40,0 Gew.-% bis 92,0 Gew.-% von einer oder mehreren ethylenisch ungesättigten Esterverbindungen der Formel (I),
B) 4,0 Gew.-% bis 30,0 Gew.-% von einer oder mehreren ethylenisch ungesättigten Esterverbindungen der Formel (II) und
C) 4,0 Gew.-% bis 30,0 Gew.-% von einer oder mehreren ethylenisch ungesättigten Esterverbindungen der Formel (III)
erhältlich ist.

7. Copolymer nach mindestens einem der vorangehenden Ansprüche, **dadurch gekennzeichnet, dass** es von 0 bis 40 Gew.-%, insbesondere 1 bis 35 Gew.-% und besonders bevorzugt 5 bis 30 Gew.-%, bezogen auf das Gewicht der Monomerzusammensetzungen zur Herstellung des erfindungsgemäßen Copolymers, an Monomerwiederholungseinheiten aufweist, die sich von ethylenisch ungesättigten Monomeren ableiten, die sich mit den Verbindungen der Formeln (I) und/oder (II) und/oder (III) copolymerisieren und die die der Formel (IV) entsprechen: 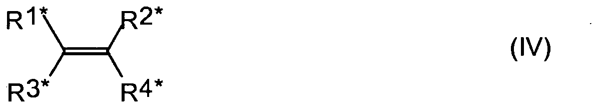 worin R^{1*} und R^{2*} unabhängig ausgewählt sind aus der Gruppe bestehend aus Wasserstoff, Halogene, CN, lineare oder verzweigte Alkylgruppen mit 1 bis 20, vorzugsweise 1 bis 6 und besonders bevorzugt 1 bis 4 Kohlenstoffatomen, welche mit 1 bis (2n+1) Halogenatomen substituiert sein können, wobei n die Zahl der Kohlenstoffatome der Alkylgruppe ist, α, β- ungesättigte lineare oder verzweigte Alkenyl- oder Alkynylgruppen mit 2 bis 10, vorzugsweise von 2 bis 6 und besonders bevorzugt von 2 bis 4 Kohlenstoffatomen, welche mit 1 bis (2n-1) Halogenatomen, vorzugsweise Chlor, substituiert sein können, wobei n die Zahl der Kohlenstoffatome der Alkylgruppe, beispielsweise CH₂=CCl-, ist, Cycloalkylgruppen mit 3 bis 8 Kohlenstoffatomen, welche mit 1 bis (2n-1) Halogenatomen, vorzugsweise Chlor, substituiert sein können, wobei n die Zahl der Kohlenstoffatome der Cycloalkylgruppe ist; Arylgruppen mit 6 bis 24 Kohlenstoffatomen, welche mit 1 bis (2n-1) Halogenatomen, vorzugsweise Chlor, und/oder Alkylgruppen mit 1 bis 6 Kohlenstoffatomen substituiert sein können, wobei n die Zahl der Kohlenstoffatome der Arylgruppe ist; C(=Y*)R^{5*}, C(=Y*)NR^{6*}R^{7*}, Y*C(=Y*)R^{5*}, SOR^{5*}, SO₂R^{5*}, OSO₂R^{5*}, NR^{8*}SO₂R^{5*}, PR^{5*}₂, P(=Y*)R^{5*}₂, Y*PR^{5*}₂, Y*P(=Y*)R^{5*}₂, NR^{8*}₂ welche mit einer zusätzlichen R^{8*}-, Aryl- oder Heterocyclyl-Gruppe quaternärisiert sein kann, wobei Y* NR^{8*}, S oder O, vorzugsweise O sein kann; R^{5*} eine Alkylgruppe mit 1 bis 20 Kohlenstoffatomen, eine Alkylthio mit 1 bis 20 Kohlenstoffatomen, OR¹⁵ (R¹⁵ ist Wasserstoff oder ein Alkalimetall), Aikoxy von 1 bis 20 Kohlenstoffatomen, Aryloxy oder Heterocyklyloxy ist;
R^{6*} und R^{7*} unabhängig Wasserstoff oder eine Alkylgruppe mit 1 bis 20 Kohlenstoffatomen sind, oder R^{6*} und R^{7*} können zusammen eine Alkylengruppe mit 2 bis 7 vorzugsweise 2 bis 5 Kohlenstoffatomen bilden, wobei sie einen 3 bis 8-gliedrigen, vorzugsweise 3 bis 6-gliedrigen Ring bilden, und R^{8*} Wasserstoff, lineare oder verzweigte Alkyl- oder Arylgruppen mit 1 bis 20 Kohlenstoffatomen sind;
R^{3*} und R^{4*} unabhängig ausgewählt aus der Gruppe bestehend aus Wasserstoff, Halogen (vorzugsweise Fluor oder Chlor), Alkylgruppen mit 1 bis 6 Kohlenstoffatomen und COOR^{9*}, worin R^{9*} Wasserstoff, ein Alkalimetall oder eine Alkylgruppe mit 1 bis 40 Kohlenstoffatomen ist, sind, oder R^{3*} und R^{4*} können zusammen eine Gruppe der Formel (CH₂)_{n'} bilden, welche mit 1 bis 2n' Halogenatomen oder C₁ bis C₄ Alkylgruppen substituiert sein kann, oder der Formel C(=O)-Y*-C(=O) bilden, wobei n' von 2 bis 6, vorzugsweise 3 oder 4 ist und Y* wie zuvor definiert ist; und wobei zumindest 2 der Reste R^{1*}, R^{2*}, R^{3*} und R^{4*} Wasserstoff oder Halogen sind.

8. Wärmeformbeständige Formmassen oder Gussglaskörper, aufweisend
A) eine oder mehrere ethylenisch ungesättigte Esterverbindungen der Formel (I) 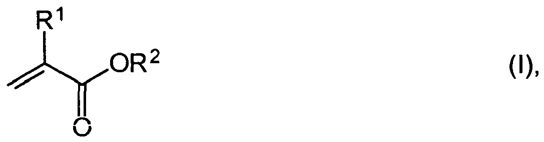 worin R¹ Wasserstoff oder Methyl darstellt und R² einen linearen oder verzweigten Alkylrest mit 1 bis 8 Kohlenstoffatomen bedeutet,
B) eine oder mehrere ethylenisch ungesättigte Esterverbindungen der Formel (II) 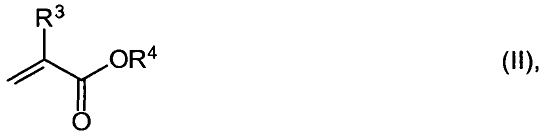 worin R³ Wasserstoff oder Methyl darstellt und R⁴ einen cyclischen Rest mit 8 bis 30 Kohlenstoffatomen bedeutet,
C) eine oder mehrere ethylenisch ungesättigte Amidverbindungen der Formel (III) 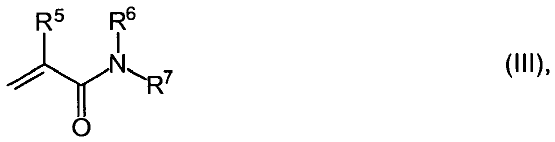 worin R⁵ Wasserstoff oder Methyl darstellt und R⁶ und R⁷, jeweils unabhängig voneinander, Wasserstoff oder einen linearen oder verzweigten Rest mit 1 bis 40 Kohlenstoffatomen bedeuten.

9. Formmassen gemäß Anspruch 8, **dadurch gekennzeichnet, dass** es ein Gewichtsmittel des Molekulargewichtes M_{W} zwischen 30.000 g/mol und 250.000 g/mol oder aufweist.

10. Gussglaskörper gemäß Anspruch 8, **dadurch gekennzeichnet, dass** es ein Gewichtsmittel des Molekulargewichts M_{W} im Bereich von 500.000 g/mol bis 5.000.000 g/mol aufweist.

11. Copolymer nach mindestens einem der Ansprüche 1 bis 7, **dadurch gekennzeichnet, dass** es ein Gewichtsmittel des Molekulargewichts M_{W} im Bereich von 30.000 g/mol bis 250.000 g/mol aufweist.

12. Verwendung des Copolymers gemäß Anspruch 11 in Formmassen zur Herstellung von Formkörpern im Extrudier- oder Spritzgussverfahren.

13. Wärmeformbeständiger Formkörper, enthaltend ein Copolymer gemäß mindestens einem der Ansprüche 1 bis 7 oder 12.

14. Formkörper nach Anspruch 13, **dadurch gekennzeichnet,**
**dass** er eine Viskositätszahl, gemessen gemäß ISO 1628-6, im Bereich von 30 ml/g bis 90 ml/g aufweist
und/oder
**dass** er eine Vicattemperatur, gemessen gemäß ISO 306, von größer 112°C aufweist

15. Verwendung eines Formkörpers nach mindestens einem der Ansprüche 13 oder 14 als Teil von Haushaltsgeräten, Kommunikationsgeräten, Hobby- oder Sportgeräten, Karosserieteil oder Teil von Karosserieteilen im Automobil-, Schiffs- oder Flugzeugbau, als Teil für Beleuchtungen, Zeichen oder Symbole, Verkaufsstellen oder Kosmetikverkaufsständer, Behältnisse, Heim- oder Bürodekorationen, Möbelanwendungen, Duschtüren und Bürotüren, sowie als Teil in der Bauindustrie, als Wand, als Fensterrahmen, Sitzbank, Leuchtenabdeckung, Streuscheibe, LED Linsen, LED Körper, LED Halbleiterabdeckung, in Solarmodulen, im Automobilscheinwerfer als Linse, Spiegel, Halterung und Abdeckung, Sensorabdeckungen und/oder zur Automobilverglasung.

## Claims

1. Copolymer for the production of moulding compositions or cast transparent sheet with increased heat resistance, obtainable by copolymerization of
A) one or more ethylenically unsaturated ester compounds of the formula (I) 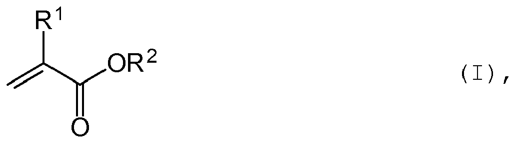 in which R¹ is hydrogen or methyl and R² is a linear or branched alkyl moiety having from 1 to 8 carbon atoms,
B) one or more ethylenically unsaturated ester compounds of the formula (II) 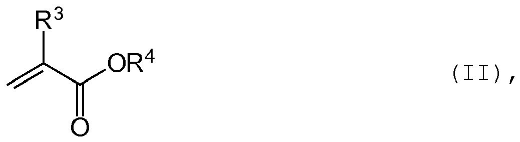 in which R³ is hydrogen or methyl and R⁴ is a cyclic moiety having from 8 to 30 carbon atoms,
C) one or more ethylenically unsaturated amide compounds of the formula (III) 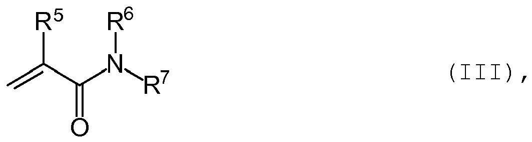 in which R⁵ is hydrogen or methyl and R⁶ and R⁷, respectively independently of one another, are hydrogen or a linear or branched moiety having from 1 to 40 carbon atoms.

2. Copolymer according to Claim 1, **characterized in that** R¹, R³ and R⁵ are methyl or **in that** R¹, R³ and R⁵ are hydrogen.

3. Copolymer according to Claim 1 or 2, **characterized in that** R² is a linear or branched alkyl moiety having from 1 to 4 carbon atoms, preferably methyl.

4. Copolymer according to at least one of the preceding claims, **characterized in that** R⁴ is an alicyclic hydrocarbon moiety, preferably a bicyclic moiety, particularly preferably an isobornyl moiety.

5. Copolymer according to at least one of the preceding claims, **characterized in that** R⁶ and R⁷ are hydrogen or **in that** R⁶ is hydrogen and R⁷ is a hydrocarbon moiety having from 1 to 20 carbon atoms, preferably having from 1 to 4 carbon atoms, particularly preferably isopropyl.

6. Copolymer according to at least one of the preceding claims, **characterized in that** it is obtainable by copolymerization of
A) from 40.0% by weight to 92.0% by weight of one or more ethylenically unsaturated ester compounds of the formula (I),
B) from 4.0% by weight to 30.0% by weight of one or more ethylenically unsaturated ester compounds of the formula (II) and
C) from 4.0% by weight to 30.0% by weight of one or more ethylenically unsaturated ester compounds of the formula (III).

7. Copolymer according to at least one of the preceding claims, **characterized in that** it comprises from 0 to 40% by weight, in particular from 1 to 35% by weight and particularly preferably from 5 to 30% by weight, based on the weight of the monomer compositions for producing the copolymer of the invention, of monomer repeat units which derive from ethylenically unsaturated monomers which copolymerize with the compounds of the formulae (I) and/or (II) and/or (III) and which correspond to the formula (IV): 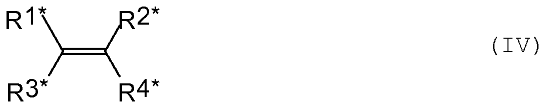 in which R^{1*} and R^{2*} are independently selected from the group consisting of hydrogen, halogens, CN, linear or branched alkyl groups having from 1 to 20, preferably from 1 to 6, and particularly preferably from 1 to 4, carbon atoms, which can have from 1 to (2n+1) halogen atoms as substituents, where n is the number of carbon atoms of the alkyl group, α,β-unsaturated linear or branched alkenyl or alkynyl groups having from 2 to 10, preferably from 2 to 6, and particularly preferably from 2 to 4, carbon atoms, which can have from 1 to (2n-1) halogen atoms, preferably chlorine, as substituents, where n is the number of carbon atoms of the alkyl group, an example being CH₂=CCl-, cycloalkyl groups having from 3 to 8 carbon atoms, which can have from 1 to (2n-1) halogen atoms, preferably chlorine, as substituents, where n is the number of carbon atoms of the cycloalkyl group; aryl groups having from 6 to 24 carbon atoms, which can have from 1 to (2n-1) halogen atoms, preferably chlorine, and/or alkyl groups having from 1 to 6 carbon atoms, as substituents, where n is the number of carbon atoms of the aryl group; C(=Y*)R^{5*}, C(=Y*)NR^{6*}R^{7*}, Y*C(=Y*)R^{5*}, SOR^{5*}, SO₂R^{5*}, OSO₂R^{5*}, NR^{8*}SO₂R^{5*}, PR^{5*}₂, P(=Y*)R^{5*}₂, Y*PR^{5*}₂, Y*P(=Y*)R^{5*}₂, NR^{8*}₂, where these can have been quaternized with an additional R^{8*} group, aryl group or heterocyclyl group, where Y* can be NR^{8*}, S or O, preferably O; R^{5*} is an alkyl group having from 1 to 20 carbon atoms, alkylthio having from 1 to 20 carbon atoms, OR¹⁵ (where R¹⁵ is hydrogen or an alkali metal), alkoxy having from 1 to 20 carbon atoms, aryloxy or heterocyclyloxy; R^{6*} and R^{7*} are independently hydrogen or an alkyl group having from 1 to 20 carbon atoms, or R^{6*} and R^{7*} can together form an alkylene group having from 2 to 7, preferably from 2 to 5, carbon atoms, where they form a 3- to 8-membered, preferably 3- to 6-membered, ring, and R^{8*} is hydrogen, linear or branched alkyl or aryl groups having from 1 to 20 carbon atoms;
R^{3*} and R^{4*} are independently selected from the group consisting of hydrogen, halogen (preferably fluorine or chlorine), alkyl groups having from 1 to 6 carbon atoms and COOR^{9*}, in which R^{9*} is hydrogen, an alkali metal or an alkyl group having from 1 to 40 carbon atoms, or R^{3*} and R^{4*} together can form a group of the formula (CH₂)_{n'}, which can have from 1 to 2n' halogen atoms or C₁ to C₄ alkyl groups as substituents, or of the formula C(=O)-Y*-C(=O), where n' is from 2 to 6, preferably 3 or 4, and Y* is defined as above; and where at least 2 of the moieties R^{1*}, R^{2*}, R^{3*} and R^{4*} are hydrogen or halogen.

8. Heat-resistant moulding compositions or cast transparent sheet products, comprising
A) one or more ethylenically unsaturated ester compounds of the formula (I) 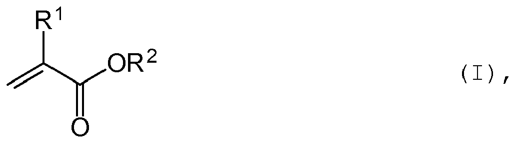 in which R¹ is hydrogen or methyl and R² is a linear or branched alkyl moiety having from 1 to 8 carbon atoms,
B) one or more ethylenically unsaturated ester compounds of the formula (II) 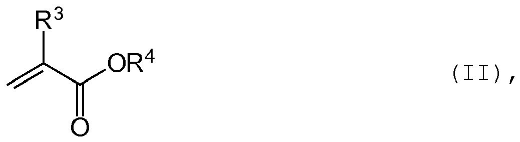 in which R³ is hydrogen or methyl and R⁴ is a cyclic moiety having from 8 to 30 carbon atoms,
C) one or more ethylenically unsaturated amide compounds of the formula (III) 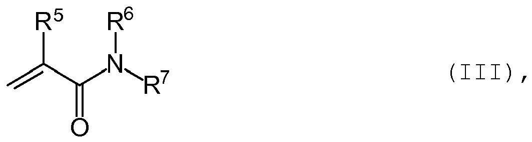 in which R⁵ is hydrogen or methyl and R⁶ and R⁷, respectively independently of one another, are hydrogen or a linear or branched moiety having from 1 to 40 carbon atoms.

9. Moulding compositions according to Claim 8, **characterized in that** their weight-average molar mass M_{W} is from 30 000 g/mol to 250 000 g/mol.

10. Cast transparent sheet product according to Claim 8, **characterized in that** its weight-average molar mass M_{W} is in the range from 500 000 g/mol to 5 000 000 g/mol.

11. Copolymer according to at least one of Claims 1 to 7, **characterized in that** its weight-average molar mass M_{W} is in the range from 30 000 g/mol to 250 000 g/mol.

12. Use of the copolymer according to Claim 11 in moulding compositions for the production of mouldings by the extrusion or injection-moulding process.

13. Heat-resistant moulding, comprising a copolymer according to at least one of Claims 1 to 7 or 12.

14. Moulding according to Claim 13, **characterized in that** its viscosity number, measured to ISO 1628-6, is in the range from 30 ml/g to 90 ml/g
and/or
**in that** its Vicat point, measured to ISO 306, is above 112°C.

15. Use of a moulding according to at least one of Claims 13 and 14 as part of household devices, of communication devices, of hobby equipment or of sports equipment, or as a bodywork part or a part of bodywork parts in automotive construction, shipbuilding or aircraft construction, or as a part for illuminants, signs or symbols, retail outlets or cosmetics counters, containers, household-decoration items or office-decoration items, furniture applications, shower doors and office doors, or else as a part in the construction industry, or as a wall, or as a window frame, bench seat, lamp cover, diffuser sheet, or LED lenses, LED bodies, or LED semiconductor cover, or in solar modules, or in automotive headlights as lens, reflector, holder or cover, or sensor covers, and/or for automotive glazing.

## Revendications

1. Copolymère pour la fabrication de matériaux de moulage ou de verre coulé à résistance à la déformation sous l'effet de la chaleur élevée, pouvant être obtenu par copolymérisation de
A) un ou plusieurs composés d'ester éthyléniquement insaturés de formule (I) 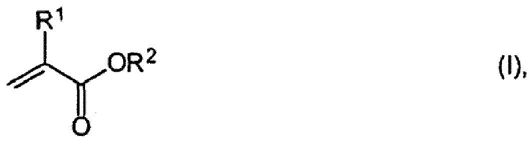 dans laquelle R¹ représente hydrogène ou méthyle et R² signifie un radical alkyle linéaire ou ramifié de 1 à 8 atomes de carbone,
B) un ou plusieurs composés d'ester éthyléniquement insaturés de formule (II) 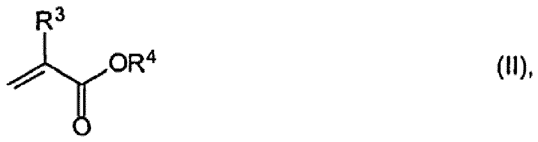 dans laquelle R³ représente hydrogène ou méthyle et R⁴ signifie un radical cyclique de 8 à 30 atomes de carbone,
C) un ou plusieurs composés d'amide éthyléniquement insaturés de formule (III) 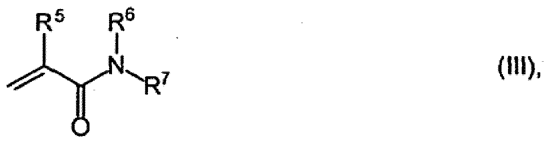 dans laquelle R⁵ représente hydrogène ou méthyle et R⁶ et R⁷ signifient chacun indépendamment l'un de l'autre l'hydrogène ou un radical linéaire ou ramifié de 1 à 40 atomes de carbone.

2. Copolymère selon la revendication 1, **caractérisé en ce que** R¹, R³ et R⁵ représentent méthyle ou **en ce que** R¹, R³ et R⁵ représentent hydrogène.

3. Copolymère selon la revendication 1 ou 2, **caractérisé en ce que** R² est un radical alkyle linéaire ou ramifié de 1 à 4 atomes de carbone, de préférence méthyle.

4. Copolymère selon au moins l'une quelconque des revendications précédentes, **caractérisé en ce que** R⁴ est un radical hydrocarboné alicyclique, de préférence un radical bicyclique, de manière particulièrement préférée un radical isobornyle.

5. Copolymère selon au moins l'une quelconque des revendications précédentes, **caractérisé en ce que** R⁶ et R⁷ représentent l'hydrogène ou **en ce que** R⁶ représente l'hydrogène et R⁷ représente un radical hydrocarboné de 1 à 20 atomes de carbone, de préférence de 1 à 4 atomes de carbone, de manière particulièrement préférée isopropyle.

6. Copolymère selon au moins l'une quelconque des revendications précédentes, **caractérisé en ce qu'**il peut être obtenu par copolymérisation de
A) 40,0 % en poids à 92,0 % en poids d'un ou de plusieurs composés d'ester éthyléniquement insaturés de formule (I),
B) 4,0 % en poids à 30,0 % en poids d'un ou de plusieurs composés d'ester éthyléniquement insaturés de formule (II), et
C) 4,0 % en poids à 30,0 % en poids d'un ou de plusieurs composés d'ester éthyléniquement insaturés de formule (III).

7. Copolymère selon au moins l'une quelconque des revendications précédentes, **caractérisé en ce qu'**il comprend de 0 à 40 % en poids, notamment 1 à 35 % en poids et de manière particulièrement préférée 5 à 30 % en poids, par rapport au poids des compositions de monomères pour la fabrication du copolymère selon l'invention, d'unités de répétition monomères qui dérivent de monomères éthyléniquement insaturés qui copolymérisent avec les composés de formule (I) et/ou (II) et/ou (III) et qui correspondent à la formule (IV) : 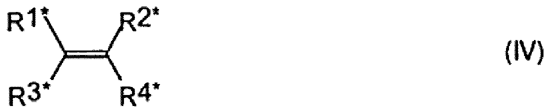 dans laquelle R^{1*} et R^{2*} sont choisis indépendamment dans le groupe constitué par l'hydrogène, les halogènes, CN, les groupes alkyle linéaires ou ramifiés de 1 à 20, de préférence 1 à 6 et de manière particulièrement préférée 1 à 4 atomes de carbone, qui peuvent être substitués avec 1 à (2n+1) atomes d'halogène, n étant le nombre d'atomes de carbone du groupe alkyle, les groupes alcényle ou alcynyle α,β-insaturés linéaires ou ramifiés de 2 à 10, de préférence 2 à 6 et de manière particulièrement préférée 2 à 4 atomes de carbone, qui peuvent être substitués avec 1 à (2n-1) atomes d'halogène, de préférence de chlore, n étant le nombre d'atomes de carbone du groupe alkyle, par exemple CH₂=CCl-, les groupes cycloalkyle de 3 à 8 atomes de carbone, qui peuvent être substitués avec 1 à (2n-1) atomes d'halogène, de préférence de chlore, n étant le nombre d'atomes de carbone du groupe cycloalkyle ; les groupes aryle de 6 à 24 atomes de carbone, qui peuvent être substitués avec 1 à (2n-1) atomes d'halogène, de préférence de chlore, et/ou des groupes alkyle de 1 à 6 atomes de carbone, n étant le nombre d'atomes de carbone du groupe aryle ; C(=Y*)R^{5*}, C(=Y*)NR^{6*}R^{7*}, Y*C(=Y*)R^{5*}, SOR^{5*}, SO₂R^{5*}, OSO₂R^{5*}, NR^{8*}SO₂R^{5*}, PR^{5*}₂, P(=Y*)R^{5*}₂, Y*PR^{5*}₂, Y*P(=Y*)R^{5*}₂, NR^{8*}₂ qui peut être quaternisé avec un groupe R^{8*}, aryle ou hétérocyclyle supplémentaire, Y* pouvant être NR^{8*}, S ou O, de préférence O ; R^{5*} étant un groupe alkyle de 1 à 20 atomes de carbone, un alkylthio de 1 à 20 atomes de carbone, OR¹⁵ (R¹⁵ est l'hydrogène ou un métal alcalin), alcoxy de 1 à 20 atomes de carbone, aryloxy ou hétérocyclyloxy ;
R^{6*} et R^{7*} sont indépendamment l'hydrogène ou un groupe alkyle de 1 à 20 atomes de carbone, ou R^{6*} et R^{7*} peuvent former ensemble un groupe alkylène de 2 à 7, de préférence 2 à 5 atomes de carbone, ceux-ci formant un cycle de 3 à 8 éléments, de préférence de 3 à 6 éléments, et R^{8*} représente l'hydrogène, des groupes alkyle ou aryle linéaires ou ramifiés de 1 à 20 atomes de carbone ;
R^{3*} et R^{4*} sont choisis indépendamment dans le groupe constitué par hydrogène, halogène (de préférence fluor ou chlore), les groupes alkyle de 1 à 6 atomes de carbone et COOR^{9*}, R^{9*} étant l'hydrogène, un métal alcalin ou un groupe alkyle de 1 à 40 atomes de carbone, ou R^{3*} et R^{4*} peuvent former ensemble un groupe de formule (CH₂)_{n'} qui peut être substitué avec 1 à 2n' atomes d'halogène ou groupes alkyle en C₁ à C₄, ou de formule C(=O)-Y*-C(=O), n' valant de 2 à 6, de préférence 3 ou 4, et Y* étant tel que défini précédemment ; et au moins 2 des radicaux R^{1*}, R^{2*}, R^{3*} et R^{4*} représentent l'hydrogène ou un halogène.

8. Matériaux de moulage ou corps en verre coulé résistants à la déformation sous l'effet de la chaleur, comprenant
A) un ou plusieurs composés d'ester éthyléniquement insaturés de formule (I) 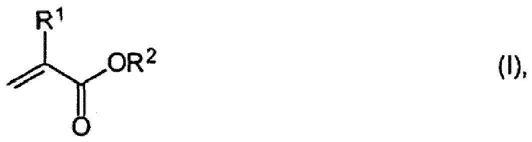 dans laquelle R¹ représente hydrogène ou méthyle et R² signifie un radical alkyle linéaire ou ramifié de 1 à 8 atomes de carbone,
B) un ou plusieurs composés d'ester éthyléniquement insaturés de formule (II) 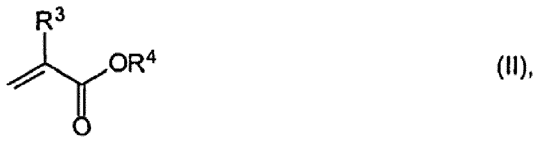 dans laquelle R³ représente hydrogène ou méthyle et R⁴ signifie un radical cyclique de 8 à 30 atomes de carbone,
C) un ou plusieurs composés d'amide éthyléniquement insaturés de formule (III) 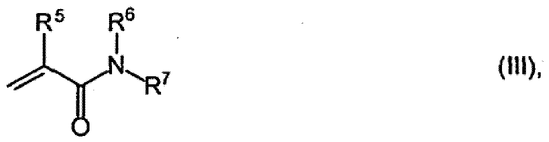 dans laquelle R⁵ représente hydrogène ou méthyle et R⁶ et R⁷ signifient chacun indépendamment l'un de l'autre l'hydrogène ou un radical linéaire ou ramifié de 1 à 40 atomes de carbone.

9. Matériaux de moulage selon la revendication 8, **caractérisés en ce qu'**ils présentent une moyenne en poids du poids moléculaire M_{W} comprise entre 30 000 g/mol et 250 000 g/mol.

10. Corps en verre coulé selon la revendication 8, **caractérisé en ce qu'**il présente une moyenne en poids du poids moléculaire M_{W} dans la plage allant de 500 000 g/mol à 5 000 000 g/mol.

11. Copolymère selon au moins l'une quelconque des revendications 1 à 7, **caractérisé en ce qu'**il présente une moyenne en poids du poids moléculaire M_{W} dans la plage allant de 30 000 g/mol à 250 000 g/mol.

12. Utilisation du copolymère selon la revendication 11 dans des matériaux de moulage pour la fabrication de corps moulés par le procédé d'extrusion ou de moulage par injection.

13. Corps moulé résistant à la déformation sous l'effet de la chaleur, contenant un copolymère selon au moins l'une quelconque des revendications 1 à 7 ou 12.

14. Corps moulé selon la revendication 13, **caractérisé en ce qu'**il présente un indice de viscosité, mesuré selon ISO 1628-6, dans la plage allant de 30 ml/g à 90 ml/g
et/ou
**en ce qu'**il présente une température Vicat, mesurée selon ISO 306, supérieure à 112 °C.

15. Utilisation d'un corps moulé selon au moins l'une quelconque des revendications 13 ou 14 en tant que partie d'appareils ménagers, d'appareils de communication, d'appareils de loisirs ou de sport, pièce de carrosserie ou partie de pièces de carrosserie dans la construction d'automobiles, de bateaux ou d'avions, en tant que pièce pour éclairages, signes ou symboles, points de vente ou stands de vente pour produits cosmétiques, récipients, décorations pour la maison ou le bureau, applications de meubles, portes de douches et portes de bureau, ainsi qu'en tant que pièce dans l'industrie du bâtiment, en tant que paroi, en tant que châssis de fenêtre, banc, couverture de lampe, panneau de diffusion, lentilles pour LED, corps de LED, couvercle de semi-conducteur pour LED, dans les modules solaires, dans les phares automobiles en tant que lentille, miroir, fixation et couvercle, couvercles de capteurs et/ou pour le vitrage automobile.
